# EUROPEAN PATENT APPLICATION

(11) **EP 4 635 605 A1**
(43) Date of publication of application: **22.10.2025**
(21) Application number: 24170752.0
(22) Date of filing: 17.04.2024
(51) Int. Cl.: B01D 53/62, B01D 53/96

(54) **CO2 CAPTURE PROCESS WITH REGENERATION OF SCRUBBER LIQUID**

(71) Applicant: Estech A/S, 5700 Svendborg (DK)
(72) Inventor: Jakobsen, Jan Stougaard, 5700 Svendborg (DK); Bonde, Jacob Lindner, 5700 Svendborg (DK); Poulsen, Morten Gildsig, 5700 Svendborg (DK)
(74) Representative: Dragsted Partners A/S

(57) **Abstract**

A method of scrubbing a gas (106), comprising carbon dioxide to deplete the gas (106) of carbon dioxide (CO₂). The method comprises the steps of:
- scrubbing the gas in a scrubber (200) with a first alkaline, aqueous scrubbing liquid (101), comprising an alkali metal cation (M⁺), the first aqueous scrubbing liquid (101) having a pH of at least 12, to dissolve carbon dioxide (CO₂) in the first alkaline aqueous scrubbing liquid (101) as hydrogen carbonate (HCO₃⁻) and carbonate (CO₃²⁻), thereby providing a spent aqueous scrubbing liquid (102) comprising hydrogen carbonate (HCO₃⁻) and carbonate (CO₃²⁻), wherein the spent aqueous scrubbing (102) liquid has a pH of at least 8, and wherein the spent aqueous scrubbing liquid (102) has a first temperature;
- precipitating hydrogen carbonate (HCO₃⁻) as alkali metal hydrogen carbonate (MHCO₃) in the spent aqueous scrubbing liquid (102);
- separating an aqueous solution comprising dissolved carbonate (CO₃²⁻), the aqueous solution having reduced content of hydrogen carbonate (HCO₃⁻), from precipitated alkali metal hydrogen carbonate (MHCO₃), to provide a second alkaline, aqueous scrubbing liquid (103) comprising carbonate (CC₃²⁻) and alkali metal cation (M); and
- at least partly using the second alkaline, aqueous scrubbing liquid (103) in scrubbing the gas (106) in the scrubber (200).

## Description

### TECHNICAL FIELD

The present invention relates to a method of scrubbing a gas, such as flue gas, comprising carbon dioxide (CO₂), using an alkaline, aqueous scrubbing liquid to deplete the gas of carbon dioxide.

### BACKGROUND

Carbon dioxide (CO₂) is a gas that when emitted into the atmosphere is damaging to the climate as it contributes to the green-house effect and rise in global temperature. It is for example produced as a byproduct when fossil fuel, e.g. coal, gasoline or diesel, is burned. Coal- and gas-fired power plants accounts for a large share of CO₂ emissions. Further, also large vehicles with combustion engines, like trucks and ships, accounts for a large share of CO₂ emissions. It is a goal for many sectors to lower carbon dioxide emissions.

Emitted gases resulting from combustion and comprising CO₂ are typically denoted flue gases or exhaust gases. Depleting such emitted gases of CO₂ by lowering the CO₂ content in the emitted gases, can be done by so called scrubbing of the gases, i.e. removing the CO₂ from the gas stream by absorbing/dissolving CO₂ in a liquid. The primary application for CO₂ scrubbing is for removal of CO₂ from the exhaust (i.e. flue gas) of coal- and gas-fired power plants, downstream of a power station, before the gas is released into the atmosphere. By using such a process, it would be possible to significantly lower the CO₂ emissions involved in coal-fired power generation. In the chemical industry, CO₂ scrubbing is used to separate CO₂ from natural gas, for use in, for example, the beverage or fertilizer sector. Further, it would also be of interest to removal of CO₂ from the exhaust of major combustion engines for example at ships, especially given that scrubbers already are used at ships to remove e.g. sulfur dioxide (SO₂) from flue gases.

In a CC₂-scrubbing system, a scrubbing solution takes up the carbon dioxide from the flue gas in a scrubber. Typically, the scrubbing of the flue gas uses an alkaline, aqueous liquid. In an alkaline, aqueous liquid, CO₂ will dissolve and partly be hydrolyzed into carbonic acid (H₂CO₃). Given the alkaline pH, formed carbonic acid (H₂CO₃) will be shifted into hydrogen carbonate (HCO₃⁻) and/or carbonate (CO₃²⁻), as outlined below.

CO₂ + H₂O => H₂CO₃

H₂CO₃+OH⁻ => HCO₃⁻ + H₂O

HCO₃⁻ + OH⁻ => CO₃²⁻ + H₂O

The technology being previously primarily developed for this process involves the use of aqueous amines, e.g. aqueous mono-ethanolamine, as absorption solvent. Amine scrubbing has been used to separate carbon dioxide (CO₂) from natural gas and hydrogen since 1930.

However, CO₂ capture based on aqueous amines has not yet been used on a larger scale for CO₂ capture from coal-fired power plants, as the process is energy consuming. The technology has not been implemented in large scale because of capital costs of installing the facility and the operating costs.

Processes based on the use of alkali metal hydroxides, e.g. KOH, to provide an alkaline, aqueous scrubber liquid has emerged an interesting alternative. In WO 2022/096644, such a process, using electrolysis in an electrolytic cell to regenerate the scrubber liquid, is disclosed. At the anode, the decrease in pH will protonate hydrogen carbonate to form a gaseous mixture of carbon dioxide and oxygen, whereas the pH will increase at the cathode, whereby a regenerated alkaline scrubber liquid may be withdrawn from the electrolytic cell. Whereas the process disclosed in WO 2022/096644 has been shown to be highly efficient, there is still a need for further improvements to such a process. Some improvements have been suggested in WO 2023/187143 and WO 2023/166166. Still, there is need for further improvements.

As an example, it is described in WO 2022/096644 that the scrubbing system may be provided with buffer tanks for storing regenerated scrubber liquid and spent scrubber liquid, respectively. This allows for decoupling and running the regeneration independently from the scrubbing. Thus, a vehicle like a bus or a truck may be provided with a scrubber and buffer tanks, whereas the regeneration by means of electrolysis may be performed at central unit separated from the CO₂ capture, i.e. the scrubbing. Such a central unit may also serve as a fuel station, i.e. the vehicle may be fueled and loaded with regenerated scrubber liquid at the central unit, whereas spent scrubber liquid may be unloaded. This is convenient for smaller vehicles regularly and repeatedly visiting a central unit. It is however less convenient for e.g. larger ships. The buffer tanks at a ship would have to be very large. Further, the need to transport substantial amounts of water, apart from the chemicals involved, is disadvantageous. Furthermore, the generation of the spent scrubber liquid is preferably performed at only slightly alkaline conditions. However, as the scrubbing is most efficient at high pH, large scrubbers are typically required to reach a pH optimal for subsequent regeneration by electrolysis.

### SUMMARY

Accordingly, there is, according to a first aspect, provided a method of scrubbing a gas comprising carbon dioxide (CO₂) to deplete the gas of carbon dioxide. The gas comprising carbon dioxide (CO₂) may typically result from combustion, i.e. the gas may be a flue gas or exhaust gas. Further, the method may be used for direct air capture, i.e. carbon capture in ambient air. However, also other gases comprising carbon dioxide (CO₂) may be scrubbed by the present method. An example would be to capture CO₂ in exhaust gas from a combustion engine of ship.

The method comprises the step of scrubbing the gas in a wet scrubber with a first alkaline, aqueous scrubbing liquid. The first alkaline, aqueous scrubbing liquid comprises an alkali metal cation (M⁺) and has a pH of at least 12. Typically, the first alkaline, aqueous scrubbing liquid comprises a dissolved metal hydroxide (MOH). The dissolved metal hydroxide (MOH) may be one or more of dissolved potassium hydroxide (KOH), dissolved sodium hydroxide (NaOH), and dissolved lithium hydroxide (LiOH). Preferably, the first alkaline, aqueous scrubbing liquid comprises potassium hydroxide (KOH).

The gas is scrubbed in a scrubber with a first alkaline, aqueous scrubbing liquid to dissolve carbon dioxide in the first alkaline aqueous scrubbing liquid as hydrogen carbonate (HCO₃⁻) and as carbonate (CO₃²⁻). Thus, a spent aqueous scrubbing liquid comprising hydrogen carbonate (HCO₃⁻) and carbonate (CO₃²⁻) is provided, and may be withdrawn from the scrubber. Further, a gas depleted of carbon dioxide may be withdrawn from the scrubber. As appreciated by the skilled person, scrubbers typically operate in counter-flow manner, i.e. the gas flows in one direction whereas the scrubbing liquid flows in opposite direction. In scrubbing the gas in the scrubber with a first alkaline, aqueous scrubbing liquid, the gas may flow in one direction, whereas the scrubbing liquid flows in opposite direction.

The spent aqueous scrubbing liquid has a pH of at least 8, such as a pH of at least 9, or at least 10. The pH of the spent aqueous scrubbing liquid is typically lower than 12, such as lower than 11. Furthermore, the spent aqueous scrubbing liquid has a first temperature. The first temperature may be in range 20 to 100°C, such as 30 to 90°C or 40 to 80°C.

The pH of the spent aqueous scrubbing liquid as well as its temperature may *inter alia* be controlled by the flow ratios of the gas to be scrubbed and the first alkaline, aqueous scrubbing liquid. As the scrubbing efficiency decreases with decreasing pH, targeting at least slightly alkaline pH, i.e. has a pH of at least 8, implies that the scrubber may be smaller. If to provide a spent aqueous scrubbing liquid with a neutral to only slightly alkaline pH, a large scrubber is needed, due to the inherent decreased absorption efficiency at lower pH.

In absorbing carbon dioxide (CO₂), the pH of the first alkaline, aqueous scrubbing liquid, initially having a pH of at least 12, will decrease. Initially, all absorbed carbon dioxide (CO₂) will be converted to carbonate (CO₃²⁻). As the pH increases, hydrogen carbonate (HCO₃⁻) will eventually also be present in the scrubber liquid. The pH will be about 11.4 in the scrubber liquid when further absorbed carbon dioxide (CO₂) will be present as hydrogen carbonate (HCO₃⁻). Once the pH is lower than 11.4, the absorption efficiency will start to decrease.

In order to provide for efficient absorption of carbon dioxide (CO₂), the pH of the first alkaline, aqueous scrubbing liquid should be at least 12 according to the present method. Preferably, the first aqueous scrubbing liquid has a pH of at least 13, such as at least 14, in order to provide further improved absorption of carbon dioxide (CO₂).

The high pH of the first alkaline, aqueous scrubbing liquid is typically provided by adding an alkali metal hydroxide (MOH). According to an embodiment, the first alkaline, aqueous scrubbing liquid thus comprises a dissolved metal hydroxide (MOH). The concentration of the metal hydroxide (MOH) in the first alkaline, aqueous scrubbing liquid may be at least 0.1 molar, such as at least 1 molar, at least 2 molar, at least 3 molar, at least 4 molar, or at least 5 molar. The concentration may be in the range 1 to 8 molar, such as in the range 2 to 7 molar. According to an embodiment, the concentration is at least 1 molar, such as more than 1 molar. The first alkaline, aqueous scrubbing liquid may comprise one or more of dissolved potassium hydroxide (KOH), dissolved sodium hydroxide (NaOH), and dissolved lithium hydroxide (LiOH). Preferably, the first alkaline, aqueous scrubbing liquid comprises potassium hydroxide (KOH). Metal hydroxides (MOH), like potassium hydroxide, are more efficient additives for alkaline, aqueous scrubbing liquid, than alkali salts e.g. potassium carbonate (K₂CO₃), as they may provide a pH as high as 14. Actually, the concentration of hydroxide ions may even exceed 1.0 molar corresponding to pH of more than 14. Further, the rate limiting step in CO₂ absorption is the amount of accessible OH⁻ ions.

The method further comprises the step of precipitating hydrogen carbonate (HCO₃⁻) as solid alkali metal hydrogen carbonate (MHCO₃), e.g. potassium hydrogen carbonate (KHCO₃), in the spent aqueous scrubbing liquid. MHCOs may be selectively precipitated from a solution comprising carbonate (CO₃²⁻) and hydrogen carbonate (HCO₃⁻). According to an embodiment, the overall concentration of potassium hydrogen carbonate (KHCO₃) and potassium carbonate (K₂CO₃) in the spent aqueous scrubbing liquid may be about 60 wt% or less, such as in the range 10 to 60 wt% or in the range 20 to 55 wt%, e.g. about 50 wt%. Once precipitated, an aqueous solution comprising dissolved carbonate (CO₃²⁻) having reduced content of hydrogen carbonate (HCO₃⁻), may be separated from the precipitated alkali metal hydrogen carbonate (MHCO₃). Hence, the method comprises the step of separating an aqueous solution comprising dissolved carbonate (CO₃²⁻) from precipitated alkali metal hydrogen carbonate (MHCO₃). The precipitated alkali metal hydrogen carbonate (MHCO₃) may for example be separated by filtration, sedimentation, and/or centrifugation. The separated aqueous solution comprising dissolved carbonate (CO₃²⁻) has reduced content of hydrogen carbonate (HCO₃⁻). Thus, a second alkaline, aqueous scrubbing liquid comprising carbonate (CO₃²⁻) and alkali metal cation (M) may be provided. The second alkaline, aqueous scrubbing liquid comprising carbonate (CO₃²⁻) is, at least partly, used in scrubbing the gas in the scrubber.

The alkali metal hydrogen carbonate (MHCO₃) is precipitated by providing an oversaturated solution. As the solubility of alkali metal hydrogen carbonate (MHCO₃) decreases with decreasing temperature, the alkali metal hydrogen carbonate (MHCO₃) may be precipitated by cooling the spent aqueous scrubbing liquid to a second temperature. The second temperature may be at least 5°C lower than the first temperature, such as at least 10°C, 15°C, or 20°C, lower than the first temperature. Though an oversaturated solution may be provided already in the scrubber, this may be less preferred manner of operating the scrubber, as it may risk blocking the scrubber. Further, metal hydrogen carbonate (MHCO₃) may be precipitated by adding an alcohol, such as ethanol to the spent aqueous scrubbing liquid.

By precipitating and separating solid alkali metal hydrogen carbonate (MHCO₃), e.g. potassium hydrogen carbonate (KHCO₃), the scrubbing may de-coupled from the re-generation of metal hydroxide (MOH), e.g. potassium hydroxide (KOH). Further, rather than having to store spent aqueous scrubbing liquid for later re-generation, as suggested in WO 2022/096644, the captured carbon dioxide may be stored as solid alkali metal hydrogen carbonate (MHCO₃), e.g. potassium hydrogen carbonate (KHCO₃), for later re-generation of alkali metal hydroxide (MOH). This will significantly reduce the weight of the used captured carbon dioxide to be transported. Further, de-coupling the absorption of carbon dioxide (CO₂) from the re-generation of metal hydroxide (MOH) by e.g. electrolysis implies the each process may by operated at an optimum pH. Whereas scrubbing is more efficient at alkaline pH, electrolysis of an aqueous solution of hydrogen carbonate (HCO₃⁻) is most efficient at about neutral pH.

De-coupling the absorption of carbon dioxide (CO₂) from the re-generation of metal hydroxide (MOH) by e.g. electrolysis, is of interest for example in COz-scrubbing systems for ships, as it allows for efficient carbon capture at sea, whereas the re-generation of metal hydroxide (MOH) by e.g. electrolysis may be performed at land. A ship may thus load metal hydroxide (MOH), e.g. a concentered aqueous solution of an alkali metal hydroxide (MOH), an aqueous slurry of metal hydroxide (MOH), or even solid metal hydroxide (MOH). Further, it may unload solid alkali metal hydrogen carbonate (MHCO₃), e.g. potassium hydrogen carbonate (KHCO₃). The solid alkali metal hydrogen carbonate (MHCO₃), e.g. potassium hydrogen carbonate (KHCO₃), may be present as slurry being pumpable.

Also in other applications, like land-based power plants, de-coupling the absorption of carbon dioxide (CO₂) from the re-generation of metal hydroxide (MOH) by e.g. electrolysis, is of interest. It may provide for a central re-generation system, serving number of remote power plants. Given that the re-generation system is more complex than the scrubbing system, it may be of interest to have a single re-generation system serving more than one scrubber. Taking out captured carbon dioxide (CO₂) as solid alkali metal hydrogen carbonate (MHCO₃), e.g. potassium hydrogen carbonate (KHCO₃) provides for more efficient transports, as there is no need to transport any solvent, e.g. water, or at least less water, if it is transported as a slurry.

Furthermore, de-coupling the absorption of carbon dioxide (CO₂) from the re-generation of metal hydroxide (MOH) by electrolysis implies that control of concentration, water/liquid balance and temperature in the electrolysis becomes easier.

In order to improve the absorption efficiency, an alkali metal hydroxide (MOH) may be added to the second alkaline, aqueous scrubbing liquid before it is used in scrubbing the gas in the scrubber. By adding an alkali metal hydroxide (MOH), the pH and the amount of accessible OH⁻ ions are increased. As already mentioned, the metal hydroxide may be potassium hydroxide (KOH), sodium hydroxide (NaOH), and/or dissolved lithium hydroxide (LiOH). According to an embodiment, the alkali metal hydroxide is potassium hydroxide (KOH).

According to an embodiment, the resulting aqueous scrubbing liquid with increased pH is used as the first alkaline, aqueous scrubbing liquid. Accordingly, the pH of the second alkaline, aqueous scrubbing liquid is increased to at least 12 by adding an alkali metal hydroxide (MOH).

According to another embodiment, the scrubbing of the gas is performed at least in a first stage and in a second stage. In the second stage of scrubbing, downstream of the first stage of scrubbing, the first alkaline, aqueous scrubbing liquid is used. Further, the second alkaline, aqueous scrubbing liquid is, at least partly, used in the first stage of scrubbing, i.e. the first contact between the gas and the scrubbing liquid. The first stage of scrubbing is upstream of the second stage of scrubbing. The pH of the first alkaline, aqueous scrubbing liquid is typically higher than the pH of the second alkaline aqueous scrubbing liquid. The pH of the second alkaline, aqueous scrubbing liquid may be 8 to 12, such as 9 to 11. Also in this embodiment, the pH of the second alkaline, aqueous scrubbing liquid may be increased before being used in scrubbing the gas in the scrubber.

As already described, alkali metal hydroxide (MOH) is used in the present method to increase the pH of the scrubber liquid(s), e.g. to provide the first alkaline, aqueous scrubbing liquid. The alkali metal hydroxide (MOH) may be provided from the separated precipitated alkali metal hydrogen carbonate (MHCO₃). This may be performed by electrolysis, as described in e.g. WO 2022/066644, as well as in WO 2023/166166 and WO 2023/187143.

According to an embodiment, the method further comprises providing alkali metal hydroxide (MOH) by electrolysis of an aqueous hydrogen carbonate (HCO₃⁻) solution. The alkali metal hydroxide (MOH) is provided by dissolving the separated, precipitated alkali metal hydrogen carbonate (MHCO₃) to provide an aqueous hydrogen carbonate (HCO³⁻) solution. The precipitated alkali metal hydrogen carbonate (MHCO₃) may be dissolved by adding water and optionally heating. The aqueous hydrogen carbonate (HCO³⁻) solution is fed to an anode chamber of an electrolytic cell, comprising the anode chamber and a cathode chamber. The anode chamber and the cathode chamber are separated by a membrane. The membrane is permeable to alkali metals, such as lithium, sodium, and potassium, but has no, or low, permeability to hydrogen carbonate (HCO₃⁻) and/or to carbonate (CO₃²⁻). Typically, the membrane is permeable only to cations. The membrane may be a cation-exchange membrane. In the electrolytic cell, the aqueous hydrogen carbonate solution is electrolyzed. The electrolysis increases the pH of the aqueous hydrogen carbonate solution in the cathode chamber. Further, the electrolysis depletes the aqueous hydrogen carbonate solution of hydrogen carbonate (HCO₃⁻) in the anode chamber by decreasing the pH thereby generating carbon dioxide. Furthermore, the electrolysis generates gaseous hydrogen in the cathode chamber and a gaseous mixture of oxygen and carbon dioxide in the anode chamber. As the increases the pH in the cathode chamber, and as the membrane is permeable to cations, an aqueous solution of metal hydroxide (MOH) is formed in the cathode chamber of the electrolytic cell. The aqueous solution of metal hydroxide (MOH) is withdrawn from the cathode chamber of the electrolytic cell. The withdrawn aqueous solution of metal hydroxide (MOH) may be used directly as first alkaline, aqueous scrubbing liquid. However, it may also be concentrated before being used.

In embodiments, wherein the method further comprises providing alkali metal hydroxide (MOH) by electrolysis of an aqueous hydrogen carbonate (HCOs') solution, the provision of the metal hydroxide (MOH) is decoupled from the scrubbing of the gas comprising carbon dioxide. Thus, the scrubbing may take place at a first location and the electrolysis at a second location. The gas to be scrubbed may a gas from a combustion engine of a vehicle, such as a ship. The first location may be at the vehicle, such as a ship. The second location may be at land.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which:
**Fig. 1** shows a process scheme for scrubbing a gas comprising carbon dioxide in a scrubber with an alkaline, aqueous scrubbing liquid and precipitating hydrogen carbonate (HCO₃⁻) as alkali metal hydrogen carbonate (MHCO₃) in the spent aqueous scrubbing liquid;
**Fig. 2** shows a process scheme for scrubbing a gas comprising carbon dioxide in a scrubber with an alkaline, aqueous scrubbing liquid and precipitating hydrogen carbonate (HCO₃⁻) as alkali metal hydrogen carbonate (MHCO₃) in the spent aqueous scrubbing liquid according to an embodiment;
**Fig. 3** shows a process scheme for scrubbing a gas comprising carbon dioxide in a scrubber with an alkaline, aqueous scrubbing liquid and precipitating hydrogen carbonate (HCO₃⁻) as alkali metal hydrogen carbonate (MHCO₃) in the spent aqueous scrubbing liquid according to an embodiment;
**Fig. 4** shows a process scheme for re-generating potassium hydroxide (KOH) from dissolved potassium hydrogen carbonate (KHCO₃) in an electrolytic cell;
**Fig. 5** shows CO2 absorption flux (i.e. absorption rate) as a function of measured pH level in the scrubber fluid;
**Fig. 6** shows a diagram of the solubility of KHCO₃ and K₂CO₃ in water and the influence of the temperature;
**Fig. 7** shows schematically the concentration of hydroxide, hydrogen carbonate (HCO₃⁻) and carbonate (CO₃²⁻) in scrubbing with 1 molar potassium hydroxide;

### DETAILED DESCRIPTION

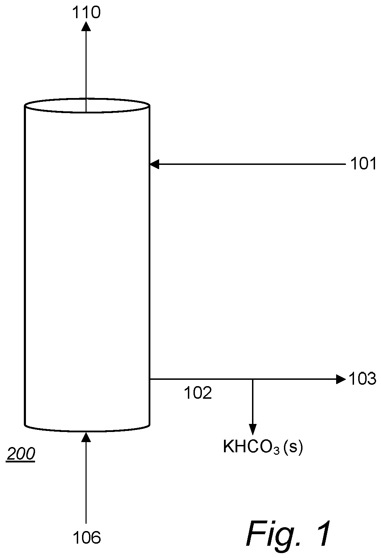

With reference to **Fig. 1****,** a process scheme for scrubbing a gas 106 comprising carbon dioxide in a scrubber 200 with a first alkaline, aqueous scrubbing liquid 101 is shown. The carbon dioxide (CO₂) is dissolved in the first alkaline aqueous scrubbing liquid 101 as hydrogen carbonate (HCO₃⁻) and carbonate (CO₃²⁻) to providing a spent aqueous scrubbing liquid 102 comprising hydrogen carbonate (HCO₃⁻) and carbonate (CO₃²⁻). The gas 106 and the first alkaline, aqueous scrubbing liquid 101 is fed to the scrubber 200 in a counter flow manner. Once withdrawn from the scrubber, precipitated potassium hydrogen carbonate (KHCO₃) is separated from spent aqueous scrubbing liquid 102 to provide a second alkaline, aqueous scrubbing liquid 103 comprising carbonate (CO₃²⁻) and alkali metal cation (M). Further, a gas 110 depleted of carbon dioxide is withdrawn from the scrubber.

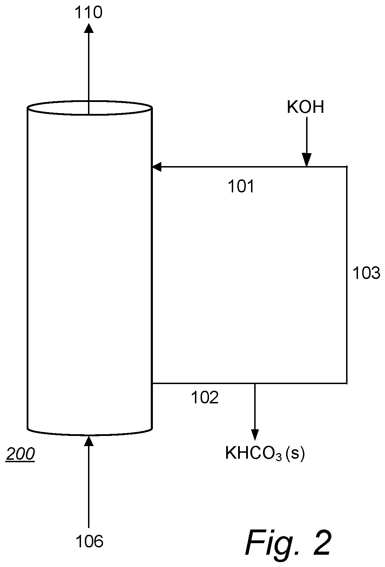

In **Fig. 2****,** a process scheme according to an embodiment is shown. In this embodiment, potassium hydroxide (KOH) is added to the second alkaline, aqueous scrubbing liquid 103 to provide the first alkaline, aqueous scrubbing liquid 101, being used in scrubbing the gas 106 in the scrubber 200.

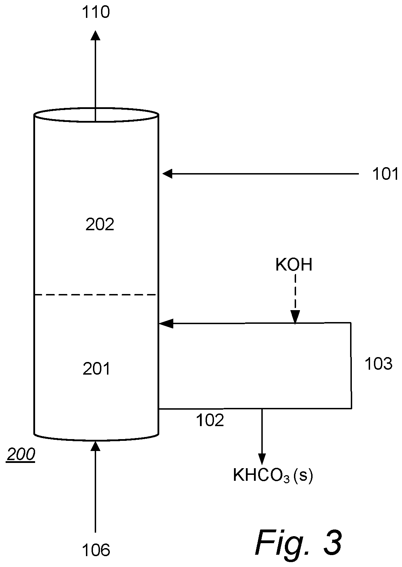

In **Fig. 3****,** a process scheme according to another embodiment is shown. In this embodiment, the scrubbing of the gas 106 is performed in a first stage 201 and in a second stage 202 in the scrubber 200. The first alkaline, aqueous scrubbing liquid 101 is used in the second stage 202 of scrubbing downstream of the first stage 201 of scrubbing. The flow direction refers to the direction of the gas flow in the scrubber 200. Further, the second alkaline, aqueous scrubbing liquid 103 is used in the first stage 201 of scrubbing upstream of the second stage 202 of scrubbing. As indicated in the figure, potassium hydroxide (KOH) may be added to the second alkaline, aqueous scrubbing liquid before it is used in scrubbing the gas 106 in the scrubber 200.

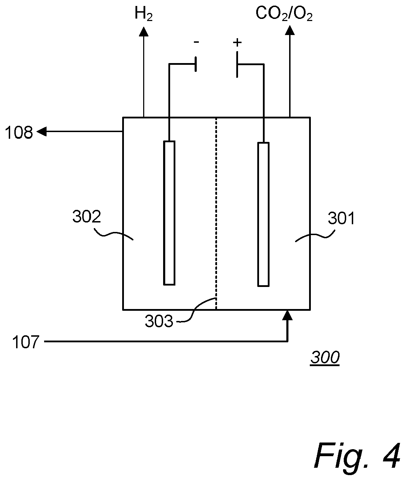

In **Fig. 4****,** a process scheme for providing alkali metal hydroxide (MOH) be electrolysis in an electrolytic cell 300 is shown. The electrolytic cell 300 comprises an anode chamber 301 and a cathode chamber 302, being separated by a membrane 303. Separated, precipitated alkali metal hydrogen carbonate (MHCO₃) is dissolved (not shown) to provide an aqueous hydrogen carbonate (HCO₃⁻) solution 107. The aqueous hydrogen carbonate (HCO³⁻) solution 107 is fed to the anode chamber 301 of the electrolytic cell 300. The aqueous hydrogen carbonate solution 107 is electrolyzed in the electrolytic cell 300 to generate gaseous hydrogen in the cathode chamber 302 and a gaseous mixture of oxygen and carbon dioxide in the anode chamber 301. An aqueous solution 108 of metal hydroxide (MOH) is withdrawn from the cathode chamber 302 of the electrolytic cell 300.

### Examples

### Example 1 - absorption rate as a function of pH

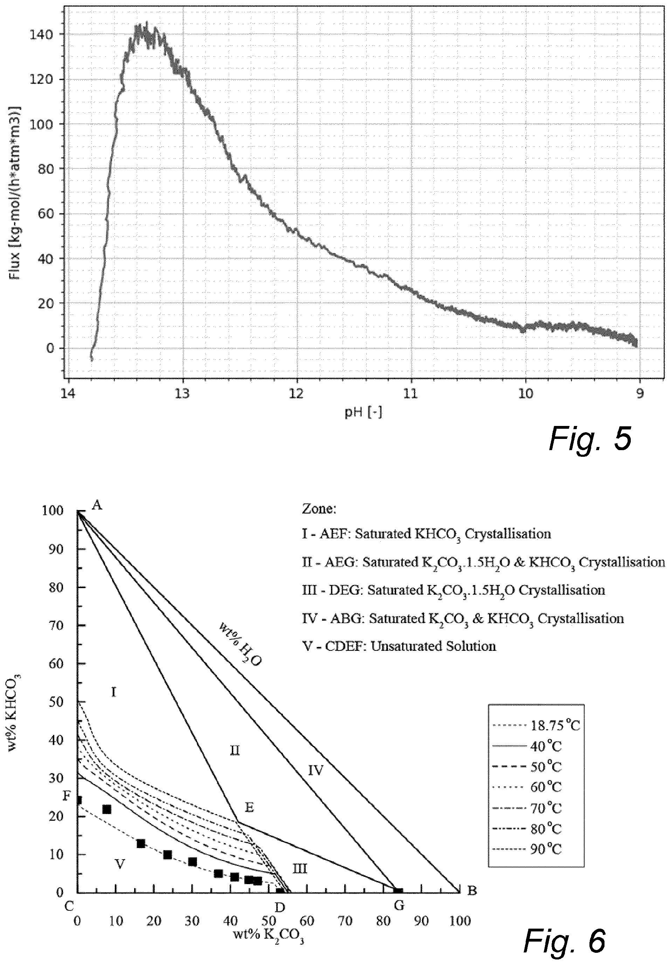

An experiment to plot the absorption rate vs. pH was performed and the result is shown in **Fig. 5****.**

The absorption experiment was performed in batch mode with a time of operation of 24 h. Before the start of the experiment, the scrubber process tank was drained and loaded with fresh KOH solvent (2.2 M). The tank was heated to reach 40 °C. During operation the exothermic reaction between CO₂ and the solvent combined with a higher gas flow temperature would provide an increase in the temperature of the tank.

Gas entered the absorption unit (200 m³/h). Both CO₂ sensors (Guardian NGDC, Edinburg Sensors, Livingston, UK) and gas flow sensors (160S Pitot tube Magnesense II Differential Pressure Transmitter, Dwyer Instruments, Michigan City, IN, USA) were calibrated prior to operation. The CO₂ and gas flow sensors were positioned at the inlet and the outlet of the scrubber. Before turning on the flow of liquid, gas ran through the absorber for about 15 min allowing the absorption column to pre-heat and the gas sensors to equilibrate. The gas stream was defined as a CO₂-rich flue gas from biogas combustion containing approx. 9.5 vol.% at 45 °C.

Then 2.2 M KOH was sent into the absorber (with a flow of 6 m³/h), upon which the capture reaction between OH⁻ and CO₂ started. The absorption unit was packed with packing layer obtaining a total cross-sectional area of packing of 0.08 m² and a total volume of 0.032 m³. Cleaned gas exited at the top of the scrubber, while the CO₂-enriched solvent exited at the bottom of the container to enter the scrubber process tank. The solvent was recirculated to the absorption unit by a pump system. The looping of KOH continued until the solvent was fully loaded and no more CO₂ could be captured. Sensors measuring the density and the volumetric flow rate (Proline Promass E 300 HART, Coriolis flowmeter, Endress+Hauser, Soborg, Denmark) were positioned after the process tank. Likewise, a pH sensor was connected to the system at this point (pHix Compact, MJK, Birkerød, Denmark).

As can be seen in **Fig 5****,** the absorption rate of CO₂ starts to decrease at a pH value lower than 12. The absorption is thus more efficient at pH higher than 12.

### Example 2 - solubility of KHCO₃ and K₂CO₃ in water

As can be seen in **Fig. 6****,** KHCO₃ may be precipitated from an aqueous solution of KHCO₃ and K₂CO₃ in water (cf. zone I and V). The diagram has been taken from the paper *"*Precipitating Characteristics of Potassium Bicarbonate Using Concentrated Potassium Carbonate Solvent for Carbon Dioxide Capture. Part 2: Crystal Growth" in Ind. Eng. Chem. Res. 2017 56 (51), 15131-15142 (DOI: 10.1021/acs.iecr.7b03637).

### Example 3 - concentration of hydroxide, hydrogen carbonate (HCO₃⁻) and carbonate (CO₃²⁻) in scrubbing with 1 molar potassium hydroxide

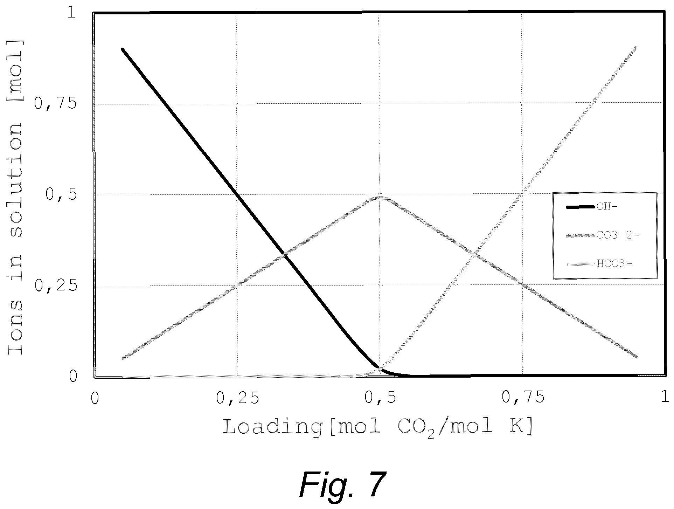

As can be seen in **Fig. 7****,** the concentration of hydroxide will decrease once carbon dioxide is dissolved and shifted into carbonate (CO₃²⁻). Eventually, carbonate (CO₃²⁻) will be shifted into hydrogen carbonate (HCO₃⁻). In going from left to right in the figure, the pH decreases.

## Claims

1. A method of scrubbing a gas (106), comprising carbon dioxide to deplete the gas (106) of carbon dioxide (CO₂), the method comprising the steps of:
- scrubbing the gas in a scrubber (200) with a first alkaline, aqueous scrubbing liquid (101), comprising an alkali metal cation (M⁺), the first aqueous scrubbing liquid (101) having a pH of at least 12, to dissolve carbon dioxide (CO₂) in the first alkaline aqueous scrubbing liquid (101) as hydrogen carbonate (HCO₃⁻) and carbonate (CO₃²⁻), thereby providing a spent aqueous scrubbing liquid (102) comprising hydrogen carbonate (HCO₃⁻) and carbonate (CO₃²⁻), wherein the spent aqueous scrubbing (102) liquid has a pH of at least 8, and wherein the spent aqueous scrubbing liquid (102) has a first temperature;
- precipitating hydrogen carbonate (HCO₃⁻) as alkali metal hydrogen carbonate (MHCO₃) in the spent aqueous scrubbing liquid (102);
- separating an aqueous solution comprising dissolved carbonate (CO₃²⁻), the aqueous solution having reduced content of hydrogen carbonate (HCO₃⁻), from precipitated alkali metal hydrogen carbonate (MHCO₃), to provide a second alkaline, aqueous scrubbing liquid (103) comprising carbonate (CO₃²⁻) and alkali metal cation (M); and
- at least partly using the second alkaline, aqueous scrubbing liquid (103) in scrubbing the gas (106) in the scrubber (200).

2. The method according to claim 1, wherein the first alkaline, aqueous scrubbing liquid (101) comprises a dissolved metal hydroxide (MOH), such as one or more of dissolved potassium hydroxide (KOH), dissolved sodium hydroxide (NaOH), and dissolved lithium hydroxide (LiOH); preferably the first alkaline, aqueous scrubbing liquid comprises potassium hydroxide (KOH).

3. The method according to claim 2, wherein the first alkaline, aqueous scrubbing liquid (101) comprises at least 0.1 molar of the metal hydroxide (MOH), such as at least 1 molar, at least 2 molar, at least 3 molar, at least 4 molar, or at least 5 molar of the metal hydroxide (MOH); preferably the first alkaline, aqueous scrubbing liquid (101) comprises 1 to 8 molar, such as in the range 2 to 7 molar, of the metal hydroxide (MOH).

4. The method according to any one of claims 1 to 3, wherein an alkali metal hydroxide (MOH) is added to the second alkaline, aqueous scrubbing liquid (103) before it is used in scrubbing the gas (106) in the scrubber (200), thereby increasing its pH; preferably the metal hydroxide is potassium hydroxide (KOH), sodium hydroxide (NaOH), and/or dissolved lithium hydroxide (LiOH); more preferably the metal hydroxide is potassium hydroxide (KOH).

5. The method according to claim 4, wherein the resulting aqueous scrubbing liquid with increased pH is used as the first alkaline, aqueous scrubbing liquid (101).

6. The method according to any one of claims 1 to 4, wherein the scrubbing of the gas (106) is performed at least in a first stage and in a second stage, the first alkaline, aqueous scrubbing liquid (101) being used in the the second stage of scrubbing downstream of the first stage of scrubbing, and wherein the second alkaline, aqueous scrubbing liquid (103), at least partly, is used in the first stage of scrubbing upstream of the second stage of scrubbing, the pH of the first alkaline, aqueous scrubbing liquid (101) being higher than the pH of the second alkaline, aqueous scrubbing liquid (103); preferably the pH of the second alkaline, aqueous scrubbing liquid being 8 to 12, such as 9 to 11.

7. The method according to any one of claims 2 to 6, wherein the alkali metal hydroxide (MOH) is provided by:
- dissolving the separated, precipitated alkali metal hydrogen carbonate (MHCO₃) to provide an aqueous hydrogen carbonate (HCO₃⁻) solution (107);
- feeding the aqueous hydrogen carbonate (HCO³⁻) solution (107) to an anode chamber (301) of an electrolytic cell (300), comprising the anode chamber (301) and a cathode chamber (302) separated by a membrane (303);
- electrolyzing the aqueous hydrogen carbonate solution (107) in the electrolytic cell (300), the electrolysis increasing the pH of the aqueous hydrogen carbonate solution in the cathode chamber (302), the electrolysis further depleting the aqueous hydrogen carbonate solution (107) of hydrogen carbonate (HCO₃⁻) in the anode chamber by decreasing the pH, and the electrolysis further generating gaseous hydrogen in the cathode chamber (302) and a gaseous mixture of oxygen and carbon dioxide in the anode chamber (301);
- withdrawing an aqueous solution (108) of metal hydroxide (MOH) from the cathode chamber (302) of the electrolytic cell (300); and
- optionally concentrating the withdrawn aqueous solution of metal hydroxide.

8. The method according to claim 7, wherein the electrolysis increasing the pH of the aqueous hydrogen carbonate solution in the cathode chamber (302).

9. The method according to claim 7 or 8, wherein the precipitated alkali metal hydrogen carbonate (MHCO₃) is dissolved by adding water and optionally heating.

10. The method according to claim 7, 8 or 9, wherein the provision of the metal hydroxide (MOH) is decoupled from the scrubbing of the gas (106) comprising carbon dioxide; preferably the scrubbing taking place at a first location and the electrolysis at a second location.

11. The method according to claim 10, wherein the gas (106) to be scrubbed is a gas from a combustion engine of a vehicle, such as a ship, the first location being at the vehicle; preferably the second location being at land.

12. The method according to any one of claims 1 to 11, wherein hydrogen carbonate (HCO₃⁻) is precipitated by cooling the spent aqueous scrubbing liquid to a second temperature; preferably the second temperature being at least 5°C lower than the first temperature, such as at least 10°C, 15°C, or 20°C, lower than the first temperature.

13. The method according to any one of claims 1 to 12, wherein the first aqueous scrubbing liquid (101) has a pH of at least 13, such as at least 14.

14. The method according to any one of claims 1 to 13, wherein the spent aqueous scrubbing (102) liquid has a pH of at least 9, such as at least 10.

15. The method according to any one of claims 1 to 14, wherein the gas is a flue gas, an exhaust gas, or ambient air.
